# EUROPEAN PATENT APPLICATION

(11) **EP 4 722 406 A1**
(43) Date of publication of application: **08.04.2026**
(21) Application number: 24815744.8
(22) Date of filing: 14.05.2024
(51) Int. Cl.: C23C 2/06, C23C 2/28, C23C 2/40, C21D 8/02

(54) **PLATED STEEL AND MANUFACTURING METHOD THEREFOR**

(30) Priority: 31.05.2023 KR 20230070565
(71) Applicant: Hyundai Steel Company, Incheon 22525 (KR)
(72) Inventor: LEE, Jae Min, Incheon 22525 (KR); SO, Seong Min, Incheon 22525 (KR)
(74) Representative: Viering, Jentschura & Partner mbB Patent- und Rechtsanwälte
(86) International application number: PCT/KR2024/006554
(87) International publication number: WO 2024/248366

(57) **Abstract**

The plated steel of the present invention comprises a steel substrate; and a plating layer formed on the steel substrate, the plating layer consisting of 1 to 3wt% aluminum (Al), 1 to 2wt% magnesium (Mg), and the balance being zinc (Zn) and unavoidable impurities, wherein the weight ratio of aluminum to magnesium in the plating layer is 1.2 or greater, wherein the plating layer comprises a primary Zn phase structure and an eutectic phase structure, and the primary Zn phase structure has a multi-layer structure in the thickness direction of the plating layer, wherein the area fraction of the primary Zn phase structure having a multi-layer structure in the plating layer is 30% or greater, and wherein the thickness of the plating layer is in a range of 15µm to 50µm.

## Description

### TECHNICAL FIELD

The present invention relates to a plated steel and a method for manufacturing the same, and more particularly, to a plated steel having excellent corrosion resistance at worked parts and a method for manufacturing the same.

### BACKGROUND ART

Conventional hot-dip galvanized steel are widely used in construction materials and home appliances due to their excellent self-sacrificing properties. When hot-dip galvanized steel is exposed to a corrosive environment, zinc (Zn) acts as a sacrificial anode for any exposed steel areas, resulting in the loss of zinc from the plating layer. This sacrificial anode action of zinc plays an outstanding role in suppressing rust formation on the steel substrate in corrosive environments, although the sacrificial anode efficiency is somewhat low. To address this issue, high corrosion-resistant plated products exhibiting excellent corrosion resistance have recently been produced in Japan and Europe by adding magnesium (Mg) to the zinc (Zn) plating bath, which forms a dense corrosion product in corrosive environments and enhances the sacrificial anode efficiency.

However, in the plating bath process where magnesium (Mg) is added to zinc (Zn), an increase in the magnesium (Mg) content leads to the formation of oxides due to a reaction with oxygen in the air, resulting in deterioration of surface quality. To resolve this issue, the amount of plating is controlled by employing an inert gas (nitrogen) in the wiping process, which regulates the plating quantity. In addition, in order to minimize the oxygen concentration in the wiping process region, a deoxidizing chamber is utilized to reduce contact with oxygen as much as possible. Although an increase in magnesium (Mg) content improves the corrosion resistance characteristic of high corrosion-resistant plated steel, it also has the disadvantage that additional processes are required due to the oxidation of magnesium (Mg), and operation becomes difficult because of the presence of oxides.

In order to minimize these problems, the amount of magnesium (Mg) added can be reduced, however, during solidification of the plating layer, the primary Zn phase that forms is relatively coarse in shape, and areas where coarse primary Zn phases are generated may develop into regions that are vulnerable in terms of corrosion resistance under corrosive environments. Furthermore, as the magnesium (Mg) content decreases, the amount of eutectic phase containing magnesium (Mg) also decreases, making it difficult to achieve high corrosion resistance. On the other hand, eutectic phase containing magnesium (Mg) have high hardness and act as initiation points for cracks in the plating layer during forming, and the exposure of the steel substrate by such cracks leads to a rapid decrease in corrosion resistance under corrosive conditions.

As related prior art, Japanese Patent Publication No. 2005-105367 exists.

### DETAILED DESCRIPTION OF THE INVENTION

### TECHNICAL PROBLEM

The technical problem to be solved by the present invention is to provide a high corrosion-resistant plated steel and a method for manufacturing the same, which exhibit crack resistance at worked parts and excellent corrosion resistance.

However, this problem is presented by way of example only, and the technical spirit of the present invention is not limited thereto.

### TECHNICAL SOLUTION

A method for manufacturing a plated steel according to one aspect of the present invention comprises (a) providing a steel substrate; (b) forming a plating layer on the steel substrate by passing the steel substrate through a plating bath containing aluminum (Al), magnesium (Mg), and zinc (Zn), wherein the plating layer comprises 1 to 3wt% aluminum (Al), 1 to 2wt% magnesium (Mg), and the balance being zinc (Zn) and unavoidable impurities; and (c) cooling the plating layer at a cooling rate of 10 to 30°C/sec; wherein the weight ratio of aluminum to magnesium in the plating layer is 1.2 or greater.

In the method for manufacturing the plated steel, the thickness of the plating layer may be in a range of 15µm to 50µm.

In the method for manufacturing a plated steel, after performing the cooling step, the plating layer comprises a primary Zn phase structure and an eutectic phase structure, and the primary Zn phase structure may have a multi-layer structure in the thickness direction of the plating layer.

In the method for manufacturing the plated steel, the area fraction of the primary Zn phase structure having a multi-layer structure in the plating layer may be 30% or greater.

In the method for manufacturing the plated steel, in the cooling step, the primary Zn phase structure is formed first, and the eutectic phase structure may be formed after the formation of the primary Zn phase structure.

According to one aspect of the present invention for solving the above technical problem, the plated steel comprises a steel substrate; and a plating layer formed on the steel substrate, the plating layer consisting of 1 to 3wt% aluminum (Al), 1 to 2wt% magnesium (Mg), and the balance being zinc (Zn) and unavoidable impurities, wherein the weight ratio of aluminum to magnesium in the plating layer is 1.2 or greater.

In the plated steel, the plating layer comprises a primary Zn phase structure and an eutectic phase structure, and the primary Zn phase structure may have a multi-layer structure in the thickness direction of the plating layer.

In the plated steel, the area fraction of the primary Zn phase structure having a multi-layer structure in the plating layer may be 30% or greater.

In the plated steel, the thickness of the plating layer may be in a range of 15µm to 50µm.

### EFFECT OF THE INVENTION

According to embodiments of the present invention, it is possible to realize a plated steel having excellent corrosion resistance at worked parts, as well as a method for manufacturing the same. Specifically, by forming the structure of the primary Zn phase in the plating layer as a multi-layer structure, it is possible to provide a high corrosion-resistant plated steel and manufacturing method that exhibit outstanding crack resistance at worked parts and superior corrosion resistance.

Of course, the scope of the present invention is not limited by these effects.

### BRIEF DESCRIPTION OF THE DRAWINGS

Fig. 1 is a flowchart illustrating a method for manufacturing a plated steel according to one embodiment of the present invention.
FIG. 2 is a photograph showing a cross-section of the plating layer in the plated steel according to Comparative Example 5, as an experimental example of the present invention.
FIG. 3 is a photograph showing a cross-section of the plating layer in the plated steel according to Example 3, as an experimental example of the present invention.

### MODE FOR CARRYING OUT THE INVENTION

Hereinafter, preferred embodiments of the present invention will be described in detail with reference to the accompanying drawings. The embodiments of the present invention are provided to more completely describe the technical spirit of the present invention to those skilled in the art. The following embodiments can be modified into various other forms, and the scope of the technical spirit of the present invention is not limited to the following embodiments. Rather, these embodiments are provided to more fully and completely present the disclosure and to more completely convey the technical spirit of the present invention to those skilled in the art.

A plated steel having excellent corrosion resistance at worked parts, and a method for manufacturing the same, according to an embodiment of the present invention, will be described in detail below. The terms used herein have been appropriately selected in consideration of their functions in the present invention, and definitions of such terms should be construed based on the overall content of this specification.

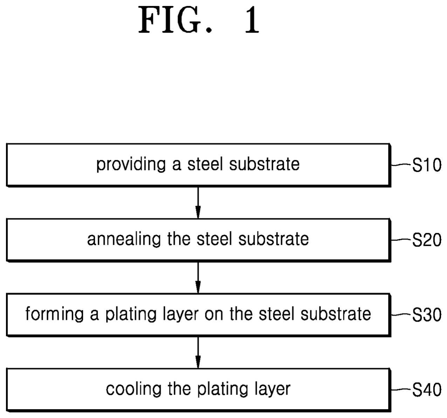

Fig. 1 is a flowchart illustrating a method for manufacturing a plated steel according to one embodiment of the present invention.

Referring to Fig. 1, the method for manufacturing a plated steel according to one embodiment of the present invention comprises (a) providing a steel substrate (S10); (b) annealing the steel substrate (S20); (c) forming a plating layer on the steel substrate by passing the annealed steel substrate through a plating bath containing aluminum (Al), magnesium (Mg), and zinc (Zn), the plating layer consisting of 1 to 3wt% aluminum (Al), 1 to 2wt% magnesium (Mg), and the balance being zinc (Zn) and unavoidable impurities (S30); and (d) cooling the plating layer at a cooling rate of 10 to 30°C/sec (S40).

In the case of high corrosion-resistant plated steel, depending on the addition amounts of Al and Mg in the Zn plating bath, various phases such as an Al phase; a Zn phase and an MgZn₂ phase with a lamellar form (binary eutectic phase); an MgZn₂ phase containing Al and a Zn phase with a lamellar form (ternary eutectic phase); and a polygonal MgZn₂ phase, are formed in the plating layer.

In a composition where both a dendritic Al phase and a polygonal MgZn₂ phase are formed, these phases mainly develop when the amounts of Al and Mg added are relatively high. In the present invention, the compositional range in which the dendritic Al phase and the polygonal MgZn₂ phase are generated is excluded in order to improve the workability of the plating layer. To achieve this, the amount of Al added is controlled to 3wt% or less, and the amount of Mg added is controlled to 2wt% or less.

The present invention improves the structure of the primary Zn phase in the plating layer to address the problem in high corrosion-resistant plated steel whereby crack propagation within the plating layer at worked parts leads to a reduction in corrosion resistance.

In the case of high corrosion-resistant plated steel, most of the cracks initiate at the eutectic phase-which are intermetallic compounds present in the plating layer-and then propagate to the interface between the plating layer and the steel substrate, thereby exposing the steel substrate. When such cracks in the plating layer are exposed to an external corrosive environment, the corrosion resistance rapidly decreases.

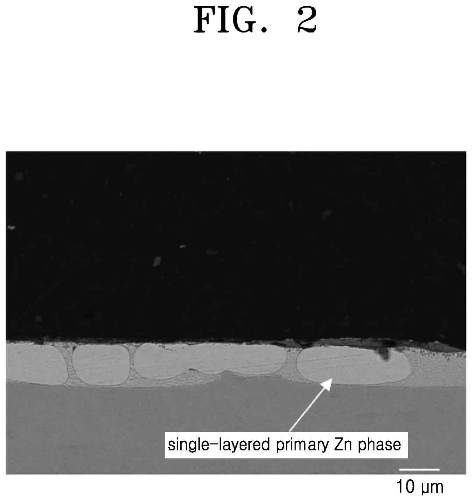

To minimize the number of these cracks, it is necessary to increase the proportion of the primary Zn phase. However, doing so results in a decrease in the proportion of the eutectic phase, which is responsible for enhancing corrosion resistance, and consequently leads to a reduction in corrosion resistance. In addition, if the primary Zn phase is coarsened in order to increase its proportion, the primary Zn phase forms as a single layer, as shown in Fig. 2.

The single-layer structure of the primary Zn phase can be defined as a microstructure in which the primary Zn phase is continuously connected from the surface of the plating layer to at least 80% of the thickness of the plating layer toward the steel substrate, based on the cross-section of the plating layer.

The single-layer structure of the primary Zn phase, by itself, exhibits excellent crack resistance in the plating layer. However, due to a lack of Zn in the surrounding eutectic phase that can suppress crack propagation, cracks are liable to propagate easily. Furthermore, under corrosive environments, a single-layered primary Zn phase is insufficient to form a robust passivation film, and thus, excessive formation of the single-layer primary Zn phase is disadvantageous in terms of corrosion resistance.

To solve these technical problems, the present invention discloses a technical concept in which the structure of the primary Zn phase present in the plating layer is formed as a multi-layer structure, rather than a single-layer structure, thereby minimizing crack propagation and enhancing corrosion resistance.

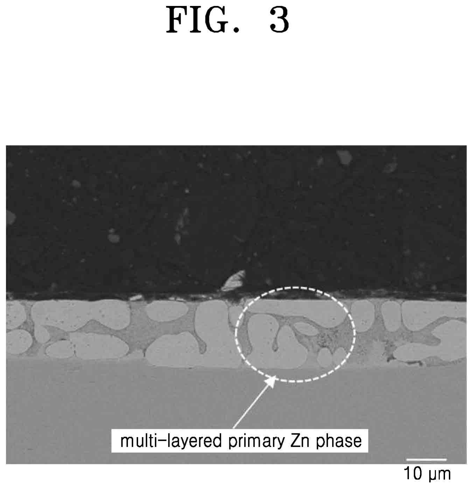

The multi-layer structure of the primary Zn phase refers to a microstructure of the plating layer, as shown in Fig. 3, in which the area fraction of the primary Zn phase overlapping two or more times is at least 30% based on the cross-section of the plating layer. Here, the primary Zn phase "overlapping two or more times as a multi-layer structure" may mean that, when viewed vertically from the upper to the lower side of the plating layer, two or more primary Zn phases are present in overlapping positions, at least partially, thereby existing in a multi-layer structure.

Furthermore, the multi-layer structure of the primary Zn phase may include a structure in which two or more separate layers of the primary Zn phase are present as distinct layers in the thickness (height) direction of the plating layer cross-section. In this case, a predetermined spacing may be provided between the primary Zn phases that are present as separate layers in the multi-layer structure of the primary Zn phase, and the distance of the predetermined spacing may range from 0.1 to 5µm.

Each of the primary Zn phases constituting the multi-layer structure may, for example, exist in two or more layers extending from the surface of the plating layer to the steel substrate, across the thickness of the plating layer.

In order to form the microstructure of the present invention, it is essential to control the phase morphology during solidification through the ratio of aluminum (Al) and magnesium (Mg) components as well as the cooling rate.

According to the technical concept of the present invention, the composition range of the plating bath (or the plating layer) is proposed as 1 to 3wt% aluminum (Al), 1 to 2wt% magnesium (Mg), with the balance being zinc (Zn). In the present specification, the compositions of the plating bath and the plating layer may be regarded as substantially identical.

When aluminum (Al) is added in an amount of less than 1wt%, it cannot sufficiently perform its role of reducing the oxidation of magnesium (Mg). When aluminum (Al) is added in an amount exceeding 3wt%, the formation of a large amount of ternary eutectic phase may occur, which can in turn cause numerous cracks during forming.

If magnesium (Mg) is added in an amount less than 1wt%, the proportion of the eutectic phase necessary to impart corrosion resistance is insufficient; whereas, if magnesium (Mg) is added in an amount exceeding 2wt%, excessive formation of the eutectic phase may result, causing more cracks during forming.

In addition, the ratio of aluminum (Al) to magnesium (Mg) added to the plating bath should be at least 1:1 or greater in order to minimize the oxidation of magnesium (Mg), and preferably the ratio should be 1.2:1 or greater. That is, it is preferable that the weight ratio of aluminum to magnesium in the plating bath is 1.2 or greater.

Aluminum (Al) present in the molten bath reacts with oxygen in the air to form a dense oxide film, thereby preventing the supply of oxygen to the surface layer of the molten bath, and as a result, the oxidation of magnesium (Mg) can be prevented.

Within the compositional range of the present invention, the sequence of phase formation during solidification is such that the primary Zn phase is generated first, and after the formation of the primary Zn phase, the eutectic phase solidifies. In order to realize the structure intended by the invention within the plating layer, the cooling rate must be controlled within a range of 10 to 30°C/s, and more strictly, may be controlled within a range of 12 to 25°C/s.

When the cooling rate is less than 10°C/s, a single-layered Zn phase may be solidified in the plating layer. When the cooling rate exceeds 30°C/s, there is a concern that the surface morphology of the plating may be deformed by the high-pressure cooling gas.

In order for the primary Zn phase to form a multi-layer structure within the plating layer, there are limitations with respect to the thickness of the plating layer. Specifically, the thickness of the plating layer should be at least 15µm and not more than 50µm. If the plating layer thickness is less than 15µm, it is insufficient to create a multi-layer structure of the primary Zn phase, if the plating layer thickness exceeds 50µm, a flow pattern may be formed on the plating surface during solidification, thereby deteriorating the plating quality. To effectively contribute to the prevention of crack propagation and the improvement of corrosion resistance, it is necessary that, based on the cross-section of the plating layer, the multi-layer structure of the primary Zn phase constitutes an area fraction of at least 30%.

The plated steel and the method for manufacturing the same, according to the technical concept of the present invention described above, can be summarized as follows.

A method for manufacturing a plated steel according to an embodiment of the present invention comprises (a) providing a steel substrate; (b) forming a plating layer on the steel substrate by passing the steel substrate through a plating bath containing aluminum (Al), magnesium (Mg), and zinc (Zn), wherein the plating layer consists of 1 to 3wt% aluminum (Al), 1 to 2wt% magnesium (Mg), and the balance being zinc (Zn) and unavoidable impurities; and (c) cooling the plating layer at a cooling rate of 10 to 30°C/sec; wherein the weight ratio of aluminum to magnesium in the plating layer is 1.2 or greater, and the thickness of the plating layer may be in a range of 15µm to 50µm. After performing the cooling step, the plating layer comprises a primary Zn phase structure and an eutectic phase structure, and the primary Zn phase structure may have a multi-layer structure in the thickness direction of the plating layer. The area fraction of the primary Zn phase structure having a multi-layer structure in the plating layer may be 30% or greater. In the cooling step, the primary Zn phase structure is formed first, and the eutectic phase structure may be formed after the formation of the primary Zn phase structure.

Meanwhile, a plated steel according to an embodiment of the present invention comprises a steel substrate; and a plating layer formed on the steel substrate, the plating layer consisting of 1 to 3wt% aluminum (Al), 1 to 2wt% magnesium (Mg), and the balance being zinc (Zn) and unavoidable impurities, wherein a weight ratio of aluminum to magnesium in the plating layer is 1.2 or greater. The plating layer comprises a primary Zn phase structure and an eutectic phase structure, and the primary Zn phase structure may have a multi-layer structure in the thickness direction of the plating layer. The area fraction of the primary Zn phase structure having a multi-layer structure in the plating layer may be 30% or greater. The thickness of the plating layer may be in a range of 15µm to 50µm.

Hereinafter, preferred experimental examples are presented to aid understanding of the present invention. However, these examples are provided only to promote understanding of the present invention, and the present invention is not limited to these examples.

### Experimental Example

A steel substrate having a thickness of 0.7mm was immersed in an alkaline solution at 50°C for 30 minutes, and then washed with water to remove foreign materials and oil from the surface, thereby preparing a specimen. The specimen was annealed and then plated. Annealing was conducted in a reducing atmosphere consisting of 5 to 20% hydrogen and 80 to 95% nitrogen, at an annealing temperature of 700 to 850°C.

Plating was performed by cooling the annealed specimen to the temperature of the plating bath, immersing it in the plating bath for 2 seconds, withdrawing it, and adjusting the plating thickness under various conditions using nitrogen wiping, wherein the plating bath temperature was set in the range of 430 to 480°C.

The cold-rolled steel sheet used as the steel substrate had a composition of 0.15wt% carbon, 0.6wt% manganese, 0.05wt% phosphorus, 0.05wt% sulfur, with the balance being iron (Fe).

Table 1 shows the composition and process conditions for the plated steel according to the experimental examples of the present invention, as well as the evaluation results for plating layer workability, corrosion resistance at worked parts, and plating surface appearance quality. It can be understood that the compositions implementing the embodiment among the experimental examples have a manufacturing tolerance of ±5% within the proposed compositional range.

In Table 1, the items "Zn," "Al," and "Mg" represent the compositions (in wt%) during the plating process; the item "plating thickness" indicates the final thickness of the plating layer, "cooling rate" refers to the cooling rate in the cooling step (S40) shown in Fig. 1, and "area fraction of the multi-layered primary Zn phase structure" denotes the area fraction of the primary Zn phase having multi-layer structure in the cross-section of the final plating layer.

In the evaluation of plating layer workability, after performing a 3T bending test, the degree of crack formation at the worked parts was assessed based on the following criteria. A grade of "⊚" indicates that no visible cracks are observed, a grade of "∘" indicates that relatively thin and fine cracks are observed visually, a grade of "△" indicates that relatively thick and few cracks are visually observed, but a concern exists for possible delamination of the plating layer. and a grade of "X" indicates that relatively thick and numerous cracks are visually observed.

For the evaluation of corrosion resistance at worked parts, the occurrence time of red rust was assessed using a salt spray test (5% NaCl solution, 35°C) after the 3T bending test at the worked area. A grade of "⊚" corresponds to a red rust occurrence time of 1100 hours or more, "∘" corresponds to around 900 hours, "△" corresponds to around 700 hours, and "X" corresponds to around 600 hours.

For the evaluation of plating surface appearance quality, a grade of "∘" indicates that no flow patterns, oxide dross attachments, or oxide wrinkles are visually observed. Conversely, a grade of "X" corresponds to a case where any one of flow patterns, oxide dross, or oxide wrinkles is visually present.

**[Table 1]**

| Example | Zn | Al | Mg | Plating Thickness (µm) | Cooling Rate (°C/s) | Area fraction of Multi-layered Primary Zn Phase (%) | Plating Layer Workab ility | Corrosion Resistance at Worked Parts | Plating Surface Appearance Quality |
|---|---|---|---|---|---|---|---|---|---|
| Comp. Ex. 1 | Bal. | 0.2 | - | - | - | - | ⊚ | X | ○ |
| Comp. Ex. 2 | Bal. | 1 | 0.5 | 15 | 12 | 5 | ⊚ | ○ | ○ |
| Comp. Ex. 3 | Bal. | 1 | 2 | 15 | 12 | 31 | ○ | ⊚ | × |
| Comp. Ex. 4 | Bal. | 2 | 1 | 10 | 12 | 17 | Δ | Δ | ○ |
| Comp. Ex. 5 | Bal. | 2 | 1.2 | 15 | 5 | 23 | Δ | Δ | ○ |
| Comp. Ex. 6 | Bal. | 2 | 1.2 | 52 | 12 | 62 | ⊚ | ⊚ | X |
| Comp. Ex. 7 | Bal. | 3.5 | 1.2 | 20 | 10 | 41 | Δ | Δ | ○ |
| Comp. Ex. 8 | Bal. | 2 | 1.2 | 25 | 35 | 38 | ⊚ | ⊚ | X |
| Comp. Ex. 9 | Bal. | 2 | 2.2 | 52 | 12 | 25 | Δ | Δ | ○ |
| Ex. 1 | Bal. | 2 | 1 | 15 | 12 | 35 | ○ | ○ | ○ |
| Ex. 2 | Bal. | 2 | 1.2 | 20 | 12 | 36 | ○ | ○ | ○ |
| Ex. 3 | Bal. | 2 | 1.5 | 25 | 15 | 40 | ⊚ | ⊚ | ○ |
| Ex. 4 | Bal. | 2 | 1.5 | 20 | 25 | 51 | ⊚ | ⊚ | ○ |
| Ex. 5 | Bal. | 2.5 | 1.5 | 30 | 20 | 54 | ⊚ | ⊚ | ○ |
| Ex. 6 | Bal. | 1.7 | 1 | 30 | 15 | 67 | ⊚ | ⊚ | ○ |
| Ex. 7 | Bal. | 1.5 | 1 | 25 | 10 | 62 | ○ | ○ | ○ |
| Ex. 8 | Bal. | 1.8 | 1.4 | 20 | 10 | 52 | ⊚ | ⊚ | ○ |

Referring to Table 1, it can be confirmed that in Examples 1 to 8, the compositions satisfy the ranges of 1 to 3wt% aluminum (Al), 1 to 2wt% magnesium (Mg), and the balance being zinc (Zn), with the weight ratio of aluminum to magnesium being 1.2 or greater. After immersing the steel substrate in a plating bath at a temperature of 430°C to 480°C, a plating layer having a thickness of 15µm to 50µm was formed by nitrogen wiping. Subsequently, cooling was performed at a rate of 10 to 30°C/sec. As a result, it was confirmed that the area fraction of the primary Zn phase structure having a multi-layer structure in the formed plating layer was 30% or greater. Accordingly, in Examples 1 to 8, no visible cracks were observed at the worked areas after the 3T bending test, indicating that the plating layer exhibited excellent workability. Furthermore, when the corrosion resistance at the worked area was evaluated by measuring the red rust occurrence time using a salt spray test (5% NaCl solution, 35°C) after the 3T bending test, the red rust occurrence time was at least 1100 hours, demonstrating that the corrosion resistance at the worked parts was extremely high. In addition, it was confirmed that the plating surface appearance quality was also satisfactory.

In contrast, Comparative Example 1 is a Zn-Al-based plated steel without the addition of magnesium (Mg). When the corrosion resistance at the worked area was evaluated by measuring the red rust occurrence time after the 3T bending test using a salt spray test (5% NaCl solution, 35°C), the red rust occurrence time was measured to be around 600 hours, confirming that the corrosion resistance at the worked parts was not satisfactory.

In Comparative Example 2, the magnesium (Mg) content does not satisfy the range of 1 to 2wt%, instead falling below this threshold. Accordingly, the area fraction of the primary Zn phase structure having a multi-layer structure within the plating layer also does not reach 30%. When the corrosion resistance at the worked area was evaluated by measuring the red rust occurrence time after the 3T bending test using a salt spray test (5% NaCl solution, 35°C), the red rust occurrence time was found to be around 900 hours, which does not attain 1100 hours. Additionally, when the amount of magnesium (Mg) added is less than 1wt%, the proportion of the eutectic phase required to impart corrosion resistance is insufficient, and thus, the corrosion resistance at the worked parts may be inadequate.

In Comparative Example 3, the composition of the plating bath satisfies the range of 1 to 3wt% aluminum (Al), 1 to 2wt% magnesium (Mg), and the balance being zinc (Zn). However, the weight ratio of aluminum to magnesium in the plating bath does not satisfy the requirement of being 1.2 or greater, instead falling below this threshold. As a result, after the 3T bending test, it was observed that the degree of crack formation at the worked area did not reach a level where no visible cracks were detected; rather, relatively thin and fine cracks could be visually observed. In addition, it was confirmed that the plating surface appearance quality was not satisfactory. When the aluminum to magnesium weight ratio in the plating bath is less than 1.2, the amount of aluminum added is insufficient to adequately prevent the supply of oxygen to the surface layer of the molten bath, which is necessary to minimize the oxidation of magnesium (Mg). Consequently, magnesium (Mg) becomes oxidized, which can result in poor plating surface appearance quality.

In Comparative Example 4, the composition of the plating bath satisfies the ranges of 1 to 3wt% aluminum (Al), 1 to 2wt% magnesium (Mg), and the balance being zinc (Zn), and the weight ratio of aluminum to magnesium in the plating bath is 1.2 or greater. However, the thickness of the plating layer does not meet the required range of 15µm to 50µm, instead falling below 15µm. When the plating layer thickness is less than 15µm, it is insufficient to create a multi-layer structure of the primary Zn phase. Accordingly, the area fraction of the primary Zn phase structure having a multi-layer structure within the plating layer does not satisfy the threshold of 30% or greater. After the 3T bending test, relatively thick and few cracks were visually observed at the worked area, which leads to concerns of possible delamination of the plating layer, indicating that the workability of the plating layer is not satisfactory. Furthermore, when the corrosion resistance at the worked area was evaluated by measuring the red rust occurrence time after the 3T bending test using a salt spray test (5% NaCl solution, 35°C), the red rust occurrence time was found to be around 700 hours, thus failing to reach 1100 hours.

In Comparative Example 5, although the composition of the plating bath satisfies the ranges of 1 to 3wt% aluminum (Al), 1 to 2wt% magnesium (Mg), with the balance being zinc (Zn), and the weight ratio of aluminum to magnesium is 1.2 or greater, and the plating layer thickness meets the required range of 15µm to 50µm, the cooling rate during the cooling step of Fig. 1 does not satisfy the range of 10 to 30°C/sec, instead falling below this threshold. As a result, a single-layered Zn phase is solidified within the plating layer, so that the area fraction of the primary Zn phase structure having a multi-layer structure does not reach 30%. After the 3T bending test, relatively thick and few cracks were visually observed at the worked area, which leads to concerns of possible delamination of the plating layer, indicating that the workability of the plating layer is not satisfactory. Furthermore, when the corrosion resistance at the worked area was evaluated by measuring the red rust occurrence time after the 3T bending test using a salt spray test (5% NaCl solution, 35°C), the red rust occurrence time was found to be around 700 hours, thus failing to reach 1100 hours.

In Comparative Example 6, although the composition of the plating bath satisfies the ranges of 1 to 3wt% aluminum (Al), 1 to 2wt% magnesium (Mg), with the balance being zinc (Zn), and the weight ratio of aluminum to magnesium is 1.2 or greater, the thickness of the plating layer exceeds the required range of 15µm to 50µm. As a result, a flow pattern is formed on the plating surface during solidification, which leads to unsatisfactory plating surface appearance quality.

In Comparative Example 7, the aluminum (Al) content in the plating bath exceeds 3wt%. In this case, a large amount of ternary eutectic phase is formed within the plating layer, which in turn causes numerous cracks to occur in the plating layer. The decrease in the proportion of the primary Zn phase and the increase in the proportion of the ternary eutectic phase result in the generation of many cracks during forming, thereby reducing the corrosion resistance at the worked parts.

In Comparative Example 8, the cooling rate exceeds 30°C/sec. Due to the high cooling pressure, non-uniform oxide wrinkles are generated on the surface layer of the plating, which results in deterioration of the plating surface appearance quality.

In Comparative Example 9, the composition of the plating bath includes more than 2wt% magnesium (Mg). This leads to the formation of a large amount of binary eutectic phase within the plating layer, resulting in the generation of numerous cracks in the plating layer. Similarly to Comparative Example 7, the decrease in the proportion of the primary Zn phase and the increase in the proportion of the binary eutectic phase lead to the generation of many cracks in the plating layer during working, thereby reducing the corrosion resistance at the worked parts.

According to the experimental examples described above, by appropriately adjusting the component ratio of aluminum (Al) and magnesium (Mg), controlling the thickness of the plating layer, and regulating the phase morphology during solidification through the cooling rate, the structure of the primary Zn phase in the plating layer can be controlled from a single-layer to a multi-layer structure. This enables the realization of high corrosion-resistant plated steel and manufacturing methods that exhibit excellent crack resistance at worked parts and superior corrosion resistance.

Although the present invention has been described with reference to embodiments thereof, various changes and modifications can be made by those skilled in the art. As long as such changes and modifications do not depart from the scope of the present invention, it is to be understood that they are within the scope of the present invention. Therefore, the scope of rights of the present invention should be defined by the claims set forth below.

## Claims

1. A method for manufacturing a plated steel, comprising:
(a) providing a steel substrate;
(b) forming a plating layer on the steel substrate by passing the steel substrate through a plating bath containing aluminum (Al), magnesium (Mg), and zinc (Zn), the plating layer consisting of 1 to 3wt% aluminum (Al), 1 to 2wt% magnesium (Mg), and the balance being zinc (Zn) and unavoidable impurities; and
(c) cooling the plating layer at a cooling rate of 10 to 30°C/sec;
wherein the weight ratio of aluminum to magnesium in the plating layer is 1.2 or greater.

2. The method for manufacturing a plated steel according to claim 1, wherein a thickness of the plating layer is in a range of 15µm to 50µm.

3. The method for manufacturing a plated steel according to claim 2, wherein the plating layer, after performing the cooling step, comprises a primary Zn phase structure and an eutectic phase structure, and the primary Zn phase structure has a multi-layer structure in the thickness direction of the plating layer.

4. The method for manufacturing a plated steel according to claim 3, wherein an area fraction of the primary Zn phase structure having the multi-layer structure in the plating layer is 30% or greater.

5. The method for manufacturing a plated steel according to claim 3, wherein in the cooling step, the primary Zn phase structure is formed first, and the eutectic phase structure is formed after the formation of the primary Zn phase structure.

6. A plated steel comprising:
a steel substrate; and
a plating layer formed on the steel substrate, the plating layer consisting of 1 to 3wt% aluminum (Al), 1 to 2wt% magnesium (Mg), and the balance being zinc (Zn) and unavoidable impurities, wherein a weight ratio of aluminum to magnesium in the plating layer is 1.2 or greater.

7. The plated steel according to claim 6, wherein the plating layer comprises a primary Zn phase structure and an eutectic phase structure, and the primary Zn phase structure has a multi-layer structure in the thickness direction of the plating layer.

8. The plated steel according to claim 7, wherein an area fraction of the primary Zn phase structure having a multi-layer structure in the plating layer is 30% or greater.

9. The plated steel according to claim 7, wherein a thickness of the plating layer is in a range of 15µm to 50µm.
